(19)

Europäisches
Patentamt
European
Patent Office
Office européen
des brevets

(11) **EP 3 185 560 A1**

(12) **EUROPEAN PATENT APPLICATION**

(43) Date of publication:
**28.06.2017 Bulletin 2017/26**

(21) Application number: **15307135.2**

(22) Date of filing: **23.12.2015**

(51) Int Cl.:
**H04N 19/46** $^{(2014.01)}$

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Thomson Licensing
92130 Issy-les-Moulineaux (FR)**

(72) Inventors:
• **LOPEZ, Patrick**
  **35576 CESSON-SÉVIGNÉ (FR)**
• **THOREAU, Dominique**
  **35576 CESSON-SÉVIGNÉ (FR)**
• **BOISSON, Guillaume**
  **35576 CESSON-SÉVIGNÉ (FR)**

(74) Representative: **Browaeys, Jean-Philippe
TECHNICOLOR
1-5, rue Jeanne d'Arc
92130 Issy-les-Moulineaux (FR)**

(54) **SYSTEM AND METHOD FOR ENCODING AND DECODING INFORMATION REPRESENTATIVE OF A BOKEH MODEL TO BE APPLIED TO AN ALL-IN-FOCUS LIGHT-FIELD CONTENT**

(57)     A method for decoding a signal representative of a light-field content comprises decoding an all-in-focus content associated to the light-field content and depth data associated to the all-in-focus content. It also comprises decoding information representative of a bokeh model to be applied to the all-in-focus content, which may comprise a type of bokeh model and amplitude parameters of the bokeh model. The amplitude parameters depend on a depth, with respect to a focus plane of the light-field content, of pixels of the all-in-focus content to which they apply.

Fig. 7

EP 3 185 560 A1

**Description**

**1. Field of the invention**

The invention lies in the field of plenoptic imaging and relates to a technique for encoding and decoding a signal representative of a light-field content. More precisely, the invention relates to a technique for encoding or decoding image or video together with bokeh information.

**2. Background**

The present section is intended to introduce the reader to various aspects of art, which may be related to various aspects of the present disclosure that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Image acquisition devices project a three-dimensional scene onto a two-dimensional sensor. During operation, a conventional capture device captures a two-dimensional (2-D) image of the scene representing an amount of light that reaches a photosensor (or photodetector or photosite) within the device. However, this 2-D image contains no information about the directional distribution of the light rays that reach the photosensor, which may be referred to as the light-field. Depth, for example, is lost during the acquisition. Thus, a conventional capture device does not store most of the information about the light distribution from the scene.

Light-field capture devices, also referred to as "light-field data acquisition devices", have been designed to measure a four-dimensional (4D) light-field of the scene by capturing the light from different viewpoints of that scene. Thus, by measuring the amount of light traveling along each beam of light that intersects the photosensor, these devices can capture additional optical information, in particular information about the directional distribution of the bundle of light rays, for providing new imaging applications by post-processing. The information acquired/obtained by a light-field capture device is referred to as the light-field data. Light-field capture devices are defined herein as any devices that are capable of capturing light-field data. There are several types of light-field capture devices, among which:

- plenoptic devices, which use a microlens array placed between the image sensor and the main lens, as described in document US 2013/0222633;
- a camera array, as described by Wilburn et al. in "High performance imaging using large camera arrays." ACM Transactions on Graphics (TOG) 24, no. 3 (2005): 765-776 and in patent document US 8514491 B2.

Light-field data processing comprises notably, but is not limited to, generating refocused images of a scene, generating perspective views of a scene, generating depth maps of a scene, generating extended depth of field (EDOF) images, generating stereoscopic images, and/or any combination of these.

Light-field data may also be used to generate a focal stack, which comprises a collection of images each of them being focused at a different focalization distance. Such a focal stack allows a user to change a focal point of the images by post-processing. It also allows generating an AIF (All In Focus) image by focus fusion: the in-focus region is detected in each image of the focal stack, then all these in-focus regions are fused to form an AIF image, in which all pixels are in focus, whatever their depth. Such an AIF image is described in "Light Field Photography with a hand-Held Plenoptic Camera", by Ren Ng et al., Stanford University Computer Science Tech Report CSTR 2005-02, April 2005.

Images or videos acquired by light-field acquisition devices may need to be transmitted to other devices, for example to display devices. It is hence important to define a format which would be the best suited for transmitting such light-field contents.

A straightforward solution consists in using standard image or video codecs (such as JPEG (Joint Photographic Experts Group), JPEG-2000, MPEG4 Part 10 AVC (Moving Picture Experts Group - Advanced Video Coding), HEVC (High Efficiency Video Coding)) on raw or post-processed plenoptic pictures.

However, this is suboptimal, because of the specificities of plenoptic imaging, which cannot be taken into account by these known coding formats, which have been developed for conventional imaging.

An alternative solution consists in transmitting, in a bit stream, both the in-focus content whether image or video, and the depth or disparity data needed to set the focus plane at different depth position. Hence, when the user wants to display the light-field content on its display device, he/she may select different portions of the content to bring different portions of the content into focus and out of focus. The focus plane is set at the desired depth, and the depth data is used to refocus the portions of the image selected by the user.

However, the picture synthesized accordingly may lack realism and aesthetic quality. Actually, out-of-focus parts of an image produced by a lens are blurred. The aesthetic quality of such a blur is called bokeh, which may be defined as "the way the lens renders out-of-focus points of light". Differences in lens aberrations and aperture shape cause some lens designs to blur the image in a way that is pleasing to the eye, while others produce blurring that is unpleasant or distracting.

When rendering an image or a video from a light-field content, it would be interesting to display an image as close as possible as a conventional image or video in terms of blur aesthetics, i.e. to display an image with good bokeh properties.

It would hence be desirable to provide a technique for encoding and decoding a signal representative of a light-field content, which would be both efficient and appropriate to the specificities of light-field imaging, and which would allow realistic and/or aesthetic rendering of image or video contents.

## 3. Summary

According to an embodiment, a method for decoding a signal representative of a light-field content, comprising decoding an all-in-focus content associated to the light-field content and depth data associated to the all-in-focus content, is provided. Such a method also comprises decoding information representative of a bokeh model to be applied to the all-in-focus content.

By light-field content, it is meant here, and throughout this document, an image or a video captured by a light-field acquisition device. By all-in-focus content, it is meant here and throughout this document, the image or video corresponding to the light-field content, in which all the pixels are in focus, whatever their depth. By depth data, it is meant here and throughout this document, depth or disparity information, which may have been estimated for example as described by M.W Tao et al. in "Depth from Combining Defocus and Correspondence Using Light-Field Cameras".

Hence, the present disclosure relies on a different approach for transmitting, and then decoding light-field content. Actually, it consists in decoding in-focus and disparity or depth data, which may have been encoded with standard video codecs such as AVC-3D, MVC, or HEVC-3D for example. It also consists in decoding bokeh information, which have been transmitted as additional metadata, and which may help achieve a more realistic and aesthetic rendering of the light-field content.

Such bokeh information comprises a bokeh model to be applied to the all-in-focus content, in order to blur the portions of the content, which should be rendered as out-of-focus. Such a bokeh model may, more simply, be a blurring model. Applying such a bokeh model consists in spatially spreading the intensity of each pixel in the light-field content on the final synthetized picture.

According to an embodiment, the information representative of a bokeh model comprises a type of bokeh model. The type of bokeh model may correspond to a type of filter to be applied to the all-in-focus content. It may define the spreading function to be applied to the pixels of the content for spatially spreading their intensity. It may also define the shape of a mask to be convoluted with the all-in-focus content in order to synthesize a final picture in which the pixels which are not in the focus plane are blurred. Such a shape may depend on the optics used in the light-field capture device, as the shape of the lens (circular, hexagonal or octagonal lens for example) impacts the shape of the bokeh in a conventional camera.

According to an embodiment, the information representative of a bokeh model also comprises amplitude parameters of the bokeh model.

Such amplitude parameters may correspond to coefficients of a filter to be applied to the all-in-focus content. It may correspond to dimensions of the mask to be convoluted with the all-in-focus content. It may also correspond to the amplitude of the spreading function.

Alternately, such amplitude parameters may be set by the user when rendering the light-field content.

According to an embodiment, the amplitude parameters depend on a depth, with respect to a focus plane of the light-field content, of pixels of the all-in-focus content to which the amplitude parameters apply.

For example, for a bokeh model showing a circular shape, its diameter may be set as a function of the depth of the pixels with respect to the focus plane. For example, for parts of the light-field content located one meter away from the focus plane, the size of the bokeh may be set to ten pixels, while it may be set to three pixels for parts of the light-field-content located half a meter away from the focus plane.

Hence, it is possible to achieve a more realistic rendering of the light-field content, with a higher lever of blur applied on the pixels, which are farther from the focus plane.

In alternate embodiments, the amplitude parameters may also depend on the angular position of pixels of the all-in-focus content vs. the optical axis of the light-field capture device.

According to an embodiment, such a method also comprises decoding parameters representative of a minimal and of a maximal depth of a focus plane of the light-field content.

Such parameters allow define a range of depths among which the user may select the position of the focus plane.

According to an embodiment, the bokeh model is a Gaussian filter. Such a bokeh model is a simple algorithm, which may be advantageously used for real-time displaying of a video, for which other type of bokeh models can be too complex.

According to an embodiment, the bokeh model is a filter taking account of at least one characteristic of a lens used for capturing the light-field content.

The present disclosure also concerns a device for decoding a signal representative of a light-field content, comprising a processor configured for decoding an all-in-focus content associated to said light-field content and depth data associated to said all-in-focus content, said processor being also configured for decoding information representative of a bokeh model to be applied to said all-in-focus content.

The present disclosure also concerns a computer program product downloadable from a communication network and/or recorded on a medium readable by a computer and/or executable by a processor, comprising program code instructions for implementing a method of decoding as described previously in this document.

The present disclosure also concerns a non-transitory computer-readable medium comprising a computer program product recorded thereon and capable of being run by a processor, including program code instructions for implementing a method of decoding as described previously in this document.

Such computer programs may be stored on a computer readable storage medium. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a read--only memory (ROM); an erasable programmable read--only memory (EPROM or Flash memory); a portable compact disc read--only memory (CD-ROM); an optical storage device; a magnetic storage device; or any suitable combination of the foregoing.

The present disclosure also concerns a method for rendering a light-field content, comprising decoding an all-in-focus content associated to the light-field content and depth data associated to the all-in-focus content. Such a method also comprises:

- decoding information representative of a bokeh model to be applied to the all-in-focus content;
- determining a focus plane for the light-field content;
- applying the bokeh model to the all-in-focus content as a function of a depth of pixels in the all-in-focus content with respect to the focus plane;
- rendering the light-field content.

Features and assets previously described in relation to a method for decoding a signal representative of a light-field content also apply to such a method for rendering a light-field content.

The present disclosure also concerns a device for rendering a light-field content, comprising a processor configured for decoding an all-in-focus content associated to the light-field content and depth data associated to the all-in-focus content, which also comprises:

- a user interface for determining a focus plane for the light-field content,
- a display for rendering the light-field content.

The processor is also configured for decoding information representative of a bokeh model to be applied to the all-in-focus content and for applying the bokeh model to the all-in-focus content as a function of a depth of pixels in the all-in-focus content with respect to the focus plane.

Such a device may be any portable handheld device such as a mobile phone or a smartphone, or a TV set for example.

The present disclosure also concerns a signal representative of a light-field content comprising at least one field comprising an all-in-focus content associated to the light-field content and at least one field comprising depth data associated to the all-in-focus content, which also comprises at least one field comprising information representative of a bokeh model to be applied to the all-in-focus content.

The present disclosure also concerns a method for encoding a signal representative of a light-field content, comprising encoding an all-in-focus content associated to the light-field content and depth data associated to the all-in-focus content, which also comprises encoding information representative of a bokeh model to be applied to the all-in-focus content.

The present disclosure also concerns a device for encoding a signal representative of a light-field content, comprising a processor configured for encoding an all-in-focus content associated to the light-field content and depth data associated to the all-in-focus content. The processor is also configured for encoding information representative of a bokeh model to be applied to the all-in-focus content.

It is to be understood that both the foregoing general description and the following detailed description are exemplary and explanatory and are not restrictive of the disclosure, as claimed.

It must also be understood that references in the specification to "one embodiment" or "an embodiment", indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

**4. Brief description of the drawings**

The invention can be better understood with reference to the following description and drawings, given by way of example and not limiting the scope of protection, and in which:

- **Figure 1** schematically illustrates a plenoptic camera;
- **Figures 2A and 2B** respectively depict the raw data (figure 2A) and details of micro-images (figure 2B) for a picture shot with the plenoptic camera of figure 1;
- **Figure 3** schematically illustrate the camera sensor, the micro-lens array, micro-images and the matrix of views of the plenoptic camera of figure 1;
- **Figures 4A and 4B** show an example of synthetic scene (figure 4A) and the corresponding 2x2 sub-aperture images (figure 4B);
- **Figures 5A and 5B** illustrate the bokeh generated on a rendered image (figure 5B) for isolated pixels in the AIF picture (figure 5A);
- **Figure 6** shows an example of frame structure for the signal representative of the light-field content according to an embodiment of the present disclosure;
- **Figure 7** is a flow chart for explaining a process for rendering a light-field content showing a bokeh effect according to an embodiment of the present disclosure;
- **Figure 8** is a schematic block diagram illustrating an example of an apparatus for decoding a signal representative of a light-field content according to an embodiment of the present disclosure;
- **Figure 9** is a schematic block diagram illustrating an example of an apparatus for rendering a light-field content showing a bokeh effect according to an embodiment of the present disclosure;
- **Figure 10** is a schematic block diagram illustrating an example of an apparatus for encoding a signal representative of a light-field content according to an embodiment of the present disclosure.

The components in the figures are not necessarily to scale, emphasis instead being placed upon illustrating the principles of the invention.

**5. Detailed description**

The general principle of the present disclosure relies on a peculiar representation format of a light-field or plenoptic content, in which bokeh information is transmitted as additional metadata, in order to increase both the realism and the aesthetics of the image or video derived from the light-field content at a rendering stage.

The present disclosure will be described more fully hereinafter with reference to the accompanying figures, in which embodiments of the disclosure are shown. This disclosure may, however, be embodied in many alternate forms and should not be construed as limited to the embodiments set forth herein. Accordingly, while the disclosure is susceptible to various modifications and alternative forms, specific embodiments thereof are shown by way of example in the drawings and will herein be described in detail. It should be understood, however, that there is no intent to limit the disclosure to the particular forms disclosed, but on the contrary, the disclosure is to cover all modifications, equivalents, and alternatives falling within the spirit and scope of the disclosure as defined by the claims. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element without departing from the teachings of the disclosure.

While not explicitly described, the present embodiments and variants may be employed in any combination or sub-combination.

It must be noted that, in the foregoing, the exemplary embodiments are described in relation to a plenoptic camera.

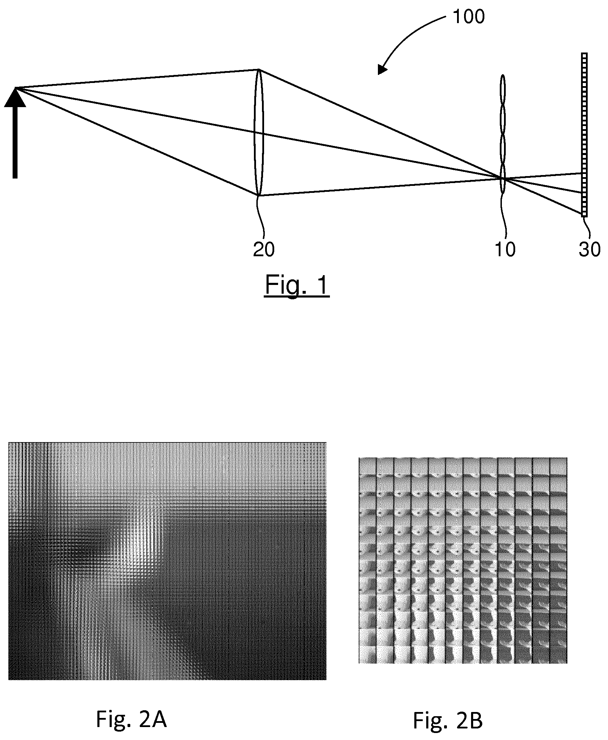

As schematically illustrated in **Figure 1,** a plenoptic camera 100 uses a micro-lens array 10 positioned in the image plane of the main lens 20 and before a photosensor 30 onto which one micro-image, also called sub-image, per micro-lens is projected. In this configuration, each micro-image depicts a certain area of the captured scene and each pixel associated with that micro-image depicts this certain area from the point of view of a certain sub-aperture location on the main lens exit pupil.

The raw image of the scene obtained as a result is the sum of all the micro-images acquired from respective portions of the photosensor. Such a raw image is illustrated in **figure 2A.** This raw image contains the angular information of the light-field. In fact, the angular information is given by the relative position of pixels in the micro-images with respect to the centre of these micro-images.

**Figure 2B** shows details of micro-images of the seagull's head associated to the raw image of **figure 2A.** Micro-images resolution and number depend on micro-lenses 10 size with respect to the sensor 30. Micro-images resolution varies significantly depending on devices and applications, and may range, for example, from 2x2 pixels up to circa 100x100 pixels.

Based on the raw image of **figure 2A,** the extraction of an image of the captured scene from a certain point of view, also called "de-multiplexing", can be performed by concatenating the raw pixels covered by each micro-image. This process can also be seen as a data conversion from a 2D raw image into a 4D light-field.

Actually, reconstructing sub-aperture images consists in gathering collocated pixels from every micro-image. The more numerous the micro-lenses, the higher the resolution of sub-aperture images. Sub-aperture images are also known as matrices of views, which are reconstructed views that correspond to a virtual point-of-view behind the main lens 20.

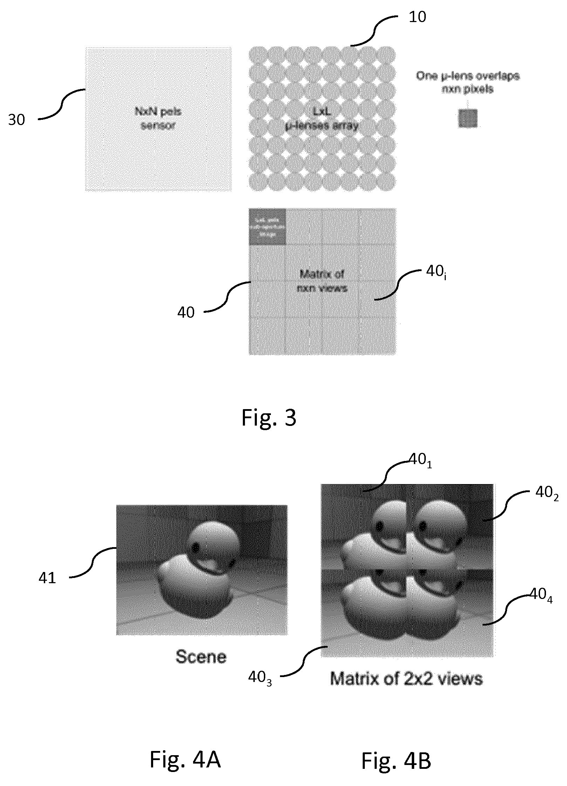

**Figure 3** illustrates the existing relationship between the size of the sensor 30, the number of micro-lenses 10, and the resolution of the sub-aperture images in the plenoptic camera of **figure 1.** In the exemplary embodiment of **figure 3,** sensor 30 is an array of NxN picture elements, or pels, or pixels. The plenoptic camera comprises a LxL micro-lenses array: one micro-lens 10 overlaps nxn pixels on sensor 30. The matrix of views 40, which may be obtained through de-multiplexing is a matrix of nxn views, made up of LxL pels sub-aperture images $40_i$.

**Figures 4A and 4B** illustrate the principle of matrix of views, by showing an example of synthetic scene 41 on **figure 4A,** and the corresponding 2x2 sub-aperture images $40_1$, $40_2$, $40_3$, $40_4$ on **figure 4B.**

From these matrices of views 40, disparity or depth information can be estimated, as described by M.W.Tao et al. in "Depth from Combining Defocus and Correspondence using Light-Field Cameras**".** It is also possible to derive an all-in-focus (AIF) image, in which all pixels are in focus, whatever their depths, as described in **"**Light Field Photography with a hand-Held Plenoptic Camera", by Ren Ng et al., Stanford University Computer Science Tech Report CSTR 2005-02, April 2005.

At the display level, the focus plane can be changed, e.g. to correspond to a user's expectations, using the available all-in-focus data and the depth or disparity information. The realism and quality of the obtained image or video is increased, according to an embodiment of the present disclosure, by applying bokeh processing.

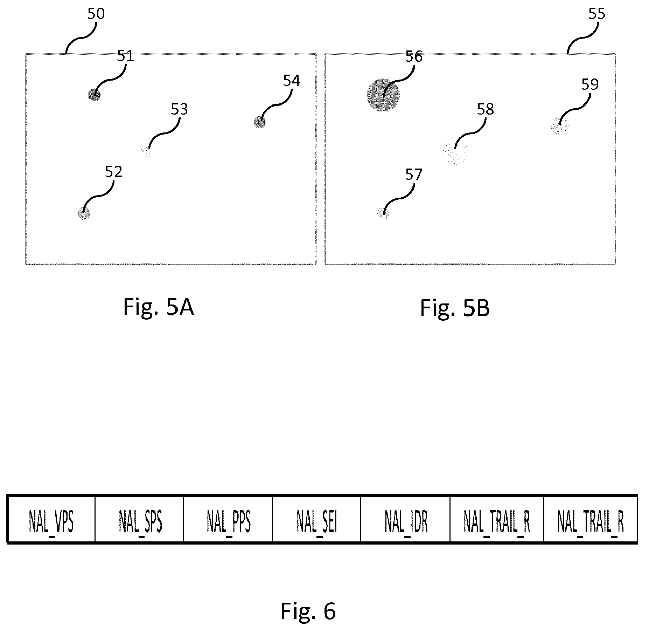

**Figures 5A and 5B** illustrate the general principle of bokeh, which may be defined as the aesthetic quality of the blur produced in the out-of-focus parts of an image produced by a lens. **Figure 5A** shows some (namely four) isolated pixels in an all-in-focus image; **Figure 5B** shows the same pixels after applying bokeh processing to the AIF image, in order to achieve a more realistic rendering. As may be observed, such a bokeh processing consists in applying a blurring model to the AIF picture, which spatially spreads the intensity of each pixel on the final synthesized picture. The spreading function may depend on several parameters like the depth of the pixel, its angular position vs. the optical axis or the form of the pupil used in the light-field acquisition device. This list is not exhaustive.

Hence, **figure 5A** shows pixels referenced 51, 52, 53 and 54 in the AIF picture 50. **Figure 5B** shows the image generated and displayed after having selected the focus plane for the light-field content and applying bokeh processing. As may be observed, pixel associated with reference numeral 52 in the AIF image is rendered as pixel associated with reference numeral 57 in the synthesized picture 55; both pixels 52 and 57 show substantially the same intensity and size, which implies that pixel 52 is in the focus plane or close to the focus plane chosen for the synthesized picture 55.

On the contrary, pixels referenced 50, 53 and 54 are rendered as larger spots 56, 58 and 59 in the synthesized picture 55, as they belong to out-of-focus parts of the image: their intensity is spread in the synthesized picture.

According to embodiments of the present disclosure, information representative of a bokeh model to be applied to the AIF content is encoded as additional metadata in the bit stream representative of the light-field content, while the AIF picture and depth data are encoded with standard video codecs (such as for example AVC-3D, MVC, HEVC-3D). For example, information representative of the bokeh model may be added in a Supplemental Enhancement Information (SEI) message, while depth data and AIF image are encoded with the HEVC video compression standard. **Figure 6** illustrates an example of an HEVC frame structure, in which Bokeh information is transmitted in the NAL_SEI element.

In such a frame structure, NAL_VPS (for "Video Parameter Set") is a syntax structure, which provides information on the layers present in the bitstream. NAL-SPS (for "Sequence Parameter Set") is a syntax structure, which provides information on coding parameters like the picture size and the reference lists size. NAL_PPS (for "Picture Parameter Set") is a syntax structure, which provides information on coding parameters like the chroma quantization parameters offsets.

According to embodiments of the present disclosure, the AIF content is encoded in NAL_IDR and NAL_TRAIL_R NAL units, which refer to a PPS, a SPS and a VPS in a given layer. The depth data are encoded in a second layer.

Hence, at a rendering stage, bokeh can be simulated in the synthesized picture, by convolving the image with a kernel that corresponds to the image of an out-of-focus point source taken with a real camera. As already mentioned, this convolution has a kernel that depends on the distance of each image point with respect to the focus plane. Such a kernel is derived from the information representative of the bokeh model encoded in the light field content bit stream.

In an embodiment, such a bokeh model takes into account the main lens 20 characteristics. Actually, bokeh is not just any blur, and defocus blur may be seen as convolution by a uniform disk, which produces sharp circles around highlights. As the main lens 20 may be seen as a circular aperture, out-of-focus points are rendered as circular spots, which diameter depend on the depth of the pixel in the scene.

In a full version of this algorithm, the contribution of each pixel of the AIF picture is computed. The masking effect is then used for aggregating these elementary contributions to the synthesized picture.

The bokeh model may show any other shape, such as for example a heart shape, an hexagonal shape, a star shape... Applying bokeh processing then consists in convoluting the AIF image by the corresponding bokeh shape, or bokeh type.

The information representative of the bokeh model may also comprise amplitude parameters of the bokeh model, such as the dimensions, size or the diameter of the bokeh shape as a function of the depth of the pixels. At a rendering stage, the user may select the focus plane of the light-field content. All the pixels, which are out of this focus plane, must show a bokeh effect. To this purpose, the AIF image is convoluted by the bokeh shape encoded in the bitstream, this convolution having a kernel that depends on the depth of the pixels with respect to the focus plane. Such an interrelationship between the dimensions of the bokeh shape applied to a pixel and the depth of the pixel is also encoded in the bitstream as additional metadata.

In an embodiment where the bokeh model corresponds to a uniform disk, a pixel focused at depth d and located at coordinates (x,y) in the AIF picture contributes to the final synthesized picture focused at depth $d_0$ at location (x+$\Delta$x, y+$\Delta$y) as follows:

$$Spread(\Delta x, \Delta y) = \left\{ \begin{array}{l} if \; (\Delta x^2 + \Delta y^2) < g(|d - d_0|): \;\; f(|d - d_0|) \\ \qquad\qquad else: \;\; 0 \end{array} \right.$$

In this embodiment, the spread is uniform over all pixels of this disk, since f(.) depends only on the depth difference, and not on the $\Delta$x nor $\Delta$y value.

In an embodiment where the bokeh model corresponds to any shape, a pixel focused at depth d and located at coordinates (x,y) in the AIF picture contributes to the final synthesized picture focused at depth $d_0$ at location (x+$\Delta$x, y+$\Delta$y) as follows:

$$Spread(\Delta x, \Delta y) = \left\{ \begin{array}{l} if \; ind(\Delta x, \Delta y, |d - d_0|)) = 1, f(|d - d_0|) \\ \qquad\qquad else: \;\; 0 \end{array} \right.$$

where ind/$\Delta$x,$\Delta$y, |d - $d_0$|) is a function which returns 1 when the point of coordinates ($\Delta$x,$\Delta$y) is inside the specific shape for the considered depth difference |d - $d_0$|, and 0 otherwise. In this embodiment, the spread is uniform over all pixels of the bokeh shape, since f(.) depends only on the depth difference, and not on the $\Delta$x nor $\Delta$y value. For instance, in the case of a disk :

$$ind(\Delta x, \Delta y, |d - d_0|) = 1 \; if \; \Delta x^2 + \Delta y^2 - g(|d - d_0|) < 0$$

In another embodiment, the user chooses the amplitude parameters of the bokeh, at the rendering stage.

However, such a blur model can be too complex for real-time displaying of a video. To avoid this complexity, simpler algorithms can be used. For example, the bokeh model transmitted in the bit stream is a Gaussian filter, which has a much softer effect than convolution by a uniform disk, which induces a lighter computational load, but whose rendering is farther from reality. In this embodiment, the AIF picture is filtered by a Gaussian filter, and the final picture is generated as the weighting sum of the AIF picture and the filtered picture. The weights in the weighting sum depend on the absolute difference between the pixel depths and the depth of the focus plane.

In such an embodiment, a pixel focused at depth d and located at coordinates (x,y) in the AIF picture contributes to the final synthesized picture focused at depth $d_0$ at location (x+$\Delta$x,y+$\Delta$y) as follows:

$$Spread(\Delta x, \Delta y) = \frac{1}{2\pi\sigma(|d-d_0|)^2} e^{-\frac{\Delta x^2+\Delta y^2}{2\sigma(|d-d_0|)^2}},$$

where $\sigma(\Delta d|)$ is a function which describes how the pixel contribution spreads over the final picture.

**Table 1** below gives an example of syntax for the additional metadata comprising the information representative of the bokeh model, in the peculiar example of a Gaussian filter.

**Table** 1

| blur_parameter_set ( ) { |
| --- |
|     **blur_model_present_flag** |
|     if(blur_model_present_flag) { |
|         **blur_filter_id** |
|         if(blur_model_id == 1) { |
|             **blur_filter_nb** |
|             for (j =0; j < blur_filter nb ; j++) { |
|                 **blur_filter depth[j]** |
|                 **blur_filter_tap_nb[j]** |
|                 for (i =0; i < blur_filter_tap_nb[j] ; i++) { |
|                     **blur_filter_taps[i]** |
|                 } |
|             } |
|         } |
|     } |
|     **min_focal_plane_depth** |
|     **max_focal_plane_depth** |
| } |

Such additional metadata include the type of algorithm used for applying bokeh processing, and the filter characteristics. In the example of **Table 1,** blur_model_id == 1 corresponds to a 2D separable Gaussian filter, whose coefficients are transmitted in blur_filter_taps[i].

In an alternate embodiment, it is possible to transmit only the model of the $\sigma$ function in the additional metadata, rather than the Gaussian filter coefficients. As the decoding device (whether a smartphone, or a TV set for example) knows the depth difference $\Delta$d, it receives and decodes the model of the $\sigma$ function, and may derive the $\sigma(\Delta d|)$ function, allowing a computation of the coefficients of the Gaussian filter to be applied to a given pixel.

In another alternate embodiment, described in more details hereafter, two or three sets of coefficients for the Gaussian filter are transmitted in the additional metadata. For example:

- a first set of coefficients corresponding to a close $\Delta$d;
- a second set of coefficients corresponding to an intermediate value of $\Delta$d;
- a third set of coefficients corresponding to a high value of $\Delta$d.

The decoding device may compute the values of the coefficients of the Gaussian filter to be applied to a given pixel in the final synthesized picture by interpolating the values of two of the sets of coefficients, depending on the depth of the pixel.

Additionally, two parameters are added, called min_focal_plane_depth and max_focal_plane_depth, which specify the minimal and maximal depth between which the user may select the focus plane.

**Table 2** below gives an example of coefficients of a Gaussian filter, which could correspond to the first set mentioned above, for a close $\Delta$d.

**Table** 2

|    | -3 | -2 | -1 | 0 | 1 | 2 | 3 |
|----|----|----|----|----|----|----|----|
| -3 | 0 | 1 | 2 | 3 | 2 | 1 | 0 |
| -2 | 1 | 5 | 17 | 26 | 17 | 5 | 1 |
| -1 | 2 | 17 | 59 | 89 | 59 | 17 | 2 |
| 0 | 3 | 26 | 89 | 136 | 89 | 26 | 3 |
| 1 | 2 | 17 | 59 | 89 | 59 | 17 | 2 |
| 2 | 1 | 5 | 17 | 26 | 17 | 5 | 1 |
| 3 | 0 | 1 | 2 | 3 | 2 | 1 | 0 |

Such coefficients could correspond to a case of blur where a pixel spreads over a seven-pixel diameter circular area.

For a higher distance $\Delta$d corresponding to a higher difference between the focus plane and the plane in which the pixel is located, the spreading area is increased. **Table 3** below gives an example of Gaussian filter coefficients in such a case:

**Table** 3

|    | -7 | -6 | -5 | -4 | -3 | -2 | -1 | 0 | 1 | 2 | 3 | 4 | 5 | 6 | 7 |
|----|----|----|----|----|----|----|----|----|----|----|----|----|----|----|----|
| -7 | 0 | 0 | 0 | 0 | 0 | 0 | 0 | 1 | 0 | 0 | 0 | 0 | 0 | 0 | 0 |
| -6 | 0 | 0 | 0 | 0 | 1 | 1 | 1 | 1 | 1 | 1 | 1 | 0 | 0 | 0 | 0 |
| -5 | 0 | 0 | 0 | 1 | 2 | 3 | 3 | 4 | 3 | 3 | 2 | 1 | 0 | 0 | 0 |
| -4 | 0 | 0 | 1 | 2 | 4 | 5 | 7 | 7 | 7 | 5 | 4 | 2 | 1 | 0 | 0 |
| -3 | 0 | 1 | 2 | 4 | 6 | 9 | 12 | 13 | 12 | 9 | 6 | 4 | 2 | 1 | 0 |
| -2 | 0 | 1 | 3 | 5 | 9 | 14 | 18 | 19 | 18 | 14 | 9 | 5 | 3 | 1 | 0 |
| -1 | 0 | 1 | 3 | 7 | 12 | 18 | 23 | 25 | 23 | 18 | 12 | 7 | 3 | 1 | 0 |
| 0 | 1 | 1 | 4 | 7 | 13 | 19 | 25 | 28 | 25 | 19 | 13 | 7 | 4 | 1 | 1 |
| 1 | 0 | 1 | 3 | 7 | 12 | 18 | 23 | 25 | 23 | 18 | 12 | 7 | 3 | 1 | 0 |
| 2 | 0 | 1 | 3 | 5 | 9 | 14 | 18 | 19 | 18 | 14 | 9 | 5 | 3 | 1 | 0 |
| 3 | 0 | 1 | 2 | 4 | 6 | 9 | 12 | 13 | 12 | 9 | 6 | 4 | 2 | 1 | 0 |
| 4 | 0 | 0 | 1 | 2 | 4 | 5 | 7 | 7 | 7 | 5 | 4 | 2 | 1 | 0 | 0 |
| 5 | 0 | 0 | 0 | 1 | 2 | 3 | 3 | 4 | 3 | 3 | 2 | 1 | 0 | 0 | 0 |
| 6 | 0 | 0 | 0 | 0 | 1 | 1 | 1 | 1 | 1 | 1 | 1 | 0 | 0 | 0 | 0 |
| 7 | 0 | 0 | 0 | 0 | 0 | 0 | 0 | 1 | 0 | 0 | 0 | 0 | 0 | 0 | 0 |

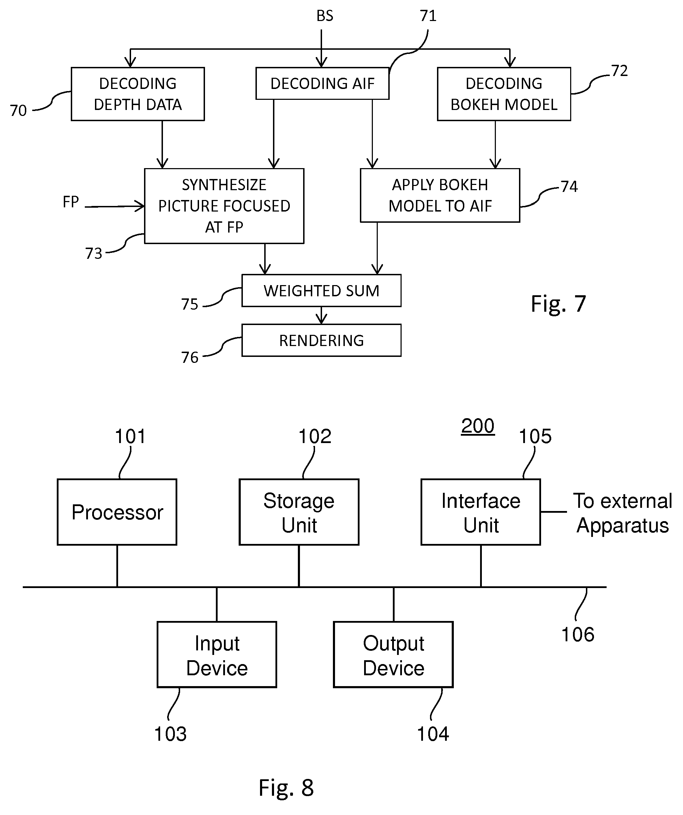

**Figure 7** is a flow chart for explaining a process for rendering a light-field content showing a bokeh effect according to an embodiment of the present disclosure.

A bit stream BS is received by a decoding device as will be described hereafter in relation with **figure 8.** Such a bit stream comprises a field comprising depth data and a field comprising an AIF content, both encoded according to standard video codecs. In a HEVC based encoding, the depth information is encoded in a layer and the AIF is encoded in another layer, where the layers presence is described in the VPS. It also comprises additional metadata, in the form of a SEI for example (field NAL_SEI in figure 6), comprising information representative of a bokeh model to be applied to the AIF content, in order to improve realism and aesthetic quality of the rendered content. Depth data are decoded at step 70 and AIF content is decoded at step 71: although two separate blocks 70 and 71 are shown on figure 7, decoding the AIF content and depth data may be operated jointly. The field NAL_VPS of the HEVC frame structure shown on **figure 6** indicates whether or not there are interdependencies between the decoding of the AIF content 70 and of the depth data 71. Bokeh model is decoded at step 72: such a decoding is independent of the decoding of the AIF content 70 and of the depth data 71.

A focus plane FP is selected for rendering the light-field content: it may be selected by the user watching the light-field content, or determined by the decoding device. Knowing both the depth data decoded at step 70 and the AIF content decoded at step 71, it is possible to synthesize a picture in which all pixels located in the focus plane FP are in focus, and all other pixels are out-of-focus.

Moreover, at step 74, the bokeh model decoded at step 72 may be applied to the AIF content decoded at step 71: for example the AIF content decoded at step 71 is filtered by a Gaussian filter, which type and coefficients have been decoded at step 72.

At step 75, a final picture is generated as the weighting sum of the picture synthesized at step 73 and of the filtered picture obtained at step 74.

The final picture is rendered at step 76, for example it is displayed on a graphics interface of the decoding or rendering device.

**Figure 8** is a schematic block diagram illustrating an example of a device for decoding a signal representative of a light-field content according to an embodiment of the present disclosure. Such a device may be any portable handheld device such as a mobile phone or a smartphone, or a TV set for example.

An apparatus 80 illustrated in **figure 8** includes a processor 81, a storage unit 82, an input device 83, an output device 84, and an interface unit 85 which are connected by a bus 86. Of course, constituent elements of the computer apparatus 80 may be connected by a connection other than a bus connection using the bus 86.

The processor 81 controls operations of the apparatus 80. The storage unit 82 stores at least one program to be executed by the processor 81, and various data, including decoded depth data or AIF content, parameters used by computations performed by the processor 81, intermediate data of computations performed by the processor 81, and so on. The processor 81 may be formed by any known and suitable hardware, or software, or a combination of hardware and software. For example, the processor 81 may be formed by dedicated hardware such as a processing circuit, or by a programmable processing unit such as a CPU (Central Processing Unit) that executes a program stored in a memory thereof.

The storage unit 82 may be formed by any suitable storage or means capable of storing the program, data, or the like in a computer-readable manner. Examples of the storage unit 82 include non-transitory computer-readable storage media such as semiconductor memory devices, and magnetic, optical, or magneto-optical recording media loaded into a read and write unit. The program causes the processor 81 to perform a process for decoding a signal representative of a light-field content according to an embodiment of the present disclosure as described previously.

The input device 83 may be formed by a keyboard, a pointing device such as a mouse, or the like for use by the user to input commands. The output device 84 may be formed by a display device to display, for example, the AIF picture allowing the user to select the focus plane. The input device 83 and the output device 84 may be formed integrally by a touchscreen panel, for example. The input device 83 may be used by an operator for selecting, on the AIF image, the focus plane of the light-field content to be rendered. Such a focus plane may then be stored into storage unit 82.

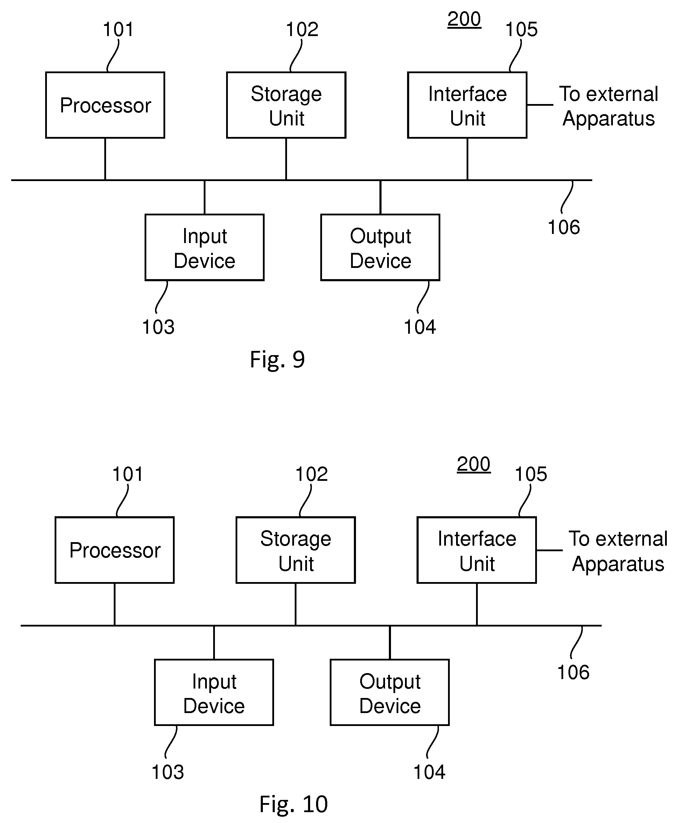

The interface unit 85 provides an interface between the apparatus 80 and an external apparatus. The interface unit 85 may be communicable with the external apparatus via cable or wireless communication. In this embodiment, the external apparatus may be the encoding device 200 of **figure 10,** a display device or the rendering device 90 of **figure 9.**

Although only one processor 81 is shown on **figure 8,** it must be understood that such a processor may comprise different modules and units embodying the functions carried out by apparatus 80 according to embodiments of the present disclosure, such as:

-    a module for decoding (70) depth data associated to the AIF content;
-    a module for decoding (71) the AIF content associated to the light-field content;
-    a module for decoding (72) the bokeh model to be applied to the AIF content.

These modules and units may also be embodied in several processors 81 communicating and co-operating with each other.

**Figure 9** is a schematic block diagram illustrating an example of a device for rendering a light-field content according to an embodiment of the present disclosure. Such a device may be any portable handheld device such as a mobile phone or a smartphone, or a TV set for example.

An apparatus 90 illustrated in **figure 9** includes a processor 91, a storage unit 92, an input device 93, an output device 94, and an interface unit 95 which are connected by a bus 96. Of course, constituent elements of the computer apparatus 90 may be connected by a connection other than a bus connection using the bus 96.

The processor 91 controls operations of the apparatus 90. The storage unit 92 stores at least one program to be executed by the processor 91, and various data, including decoded depth data or AIF content, the focus plane FP of the light-field content, parameters used by computations performed by the processor 91, intermediate data of computations performed by the processor 91, and so on. The processor 91 may be formed by any known and suitable hardware, or software, or a combination of hardware and software. For example, the processor 91 may be formed by dedicated hardware such as a processing circuit, or by a programmable processing unit such as a CPU (Central Processing Unit) that executes a program stored in a memory thereof.

The storage unit 92 may be formed by any suitable storage or means capable of storing the program, data, or the like in a computer-readable manner. Examples of the storage unit 92 include non-transitory computer-readable storage media such as semiconductor memory devices, and magnetic, optical, or magneto-optical recording media loaded into a read and write unit. The program causes the processor 91 to perform a process for rendering a light-field content according to an embodiment of the present disclosure as described previously.

The input device 93 may be formed by a keyboard, a pointing device such as a mouse, or the like for use by the user to input commands. The output device 94 may be formed by a display device to display, for example, the final synthesized picture obtained by applying bokeh processing. The input device 93 and the output device 94 may be formed integrally by a touchscreen panel, for example. The input device 93 may be used by an operator for selecting the focus plane of the light-field content to be rendered. Such a focus plane may then be stored into storage unit 92.

The interface unit 95 provides an interface between the apparatus 90 and an external apparatus. The interface unit 95 may be communicable with the external apparatus via cable or wireless communication. In this embodiment, the external apparatus may be the encoding device 200 of **figure 10.**

Although only one processor 91 is shown on **figure 9,** it must be understood that such a processor may comprise different modules and units embodying the functions carried out by apparatus 90 according to embodiments of the present disclosure, such as:

- a module for decoding (70) depth data associated to the AIF content;
- a module for decoding (71) the AIF content associated to the light-field content;
- a module for decoding (72) the bokeh model to be applied to the AIF content;
- a module for applying (74) bokeh processing to the AIF content;
- a module for synthesizing (73)the picture focused at the focus plane FP;
- a module for synthesizing (75) the final picture to be rendered;
- a module for rendering (76) the final picture.

These modules and units may also be embodied in several processors 91 communicating and co-operating with each other.

**Figure 10** is a schematic block diagram illustrating an example of a device for encoding a signal representative of a light-field content according to an embodiment of the present disclosure.

An apparatus 200 illustrated in **figure 10** includes a processor 101, a storage unit 102, an input device 103, an output device 104, and an interface unit 105 which are connected by a bus 106. Of course, constituent elements of the computer apparatus 200 may be connected by a connection other than a bus connection using the bus 106.

The processor 101 controls operations of the apparatus 200. The storage unit 102 stores at least one program to be executed by the processor 101, and various data, including parameters used by computations performed by the processor 101, intermediate data of computations performed by the processor 101, and so on. The processor 101 may be formed by any known and suitable hardware, or software, or a combination of hardware and software. For example, the processor 101 may be formed by dedicated hardware such as a processing circuit, or by a programmable processing unit such as a CPU (Central Processing Unit) that executes a program stored in a memory thereof.

The storage unit 102 may be formed by any suitable storage or means capable of storing the program, data, or the like in a computer-readable manner. Examples of the storage unit 102 include non-transitory computer-readable storage media such as semiconductor memory devices, and magnetic, optical, or magneto-optical recording media loaded into a read and write unit. The program causes the processor 101 to perform a process for encoding a signal representative of a light-field content according to an embodiment of the present disclosure as described previously.

The input device 103 may be formed by a keyboard, a pointing device such as a mouse, or the like for use by the user to input commands. The output device 104 may be formed by a display device to display, for example, the AIF content, the depth data associated to the light field content, or the matrix of views or raw data associated to the light-field content. The input device 103 and the output device 104 may be formed integrally by a touchscreen panel, for example. The input device 103 may be used by an operator for selecting an encoding rate. Such an encoding rate may then be stored into storage unit 102.

The interface unit 105 provides an interface between the apparatus 200 and an external apparatus. The interface unit 105 may be communicable with the external apparatus via cable or wireless communication. In this embodiment, the external apparatus may be the plenoptic camera 100 of **figure 1.**

Although only one processor 101 is shown on **figure 10,** it must be understood that such a processor may comprise different modules and units embodying the functions carried out by apparatus 200 according to embodiments of the present disclosure, such as:

- a module for encoding depth data associated to the AIF content according to a standard video codec such as HEVC;
- a module for encoding the AIF content associated to the light-field content according to a standard video codec such as HEVC;
- a module for encoding the bokeh model to be applied to the AIF content as additional metadata, for example as a SEI message as defined in the HEVC standard.

These modules and units may also be embodied in several processors 101 communicating and co-operating with each other.

The present disclosure thus provides a system and method allowing a more realistic and aesthetic rendering of light-field content, thanks to an appropriate representation format of the signal representative of the light-field content, which comprises a field comprising information representative of a bokeh model to be applied to the content.

## Claims

1. A method for decoding a signal representative of a light-field content, comprising decoding an all-in-focus content associated to said light-field content and depth data associated to said all-in-focus content, **wherein** it also comprises decoding information representative of a bokeh model to be applied to said all-in-focus content.

2. The method of claim 1, **wherein** said information representative of a bokeh model comprises a type of bokeh model.

3. The method of claim 1 or 2, **wherein** said information representative of a bokeh model also comprises amplitude parameters of said bokeh model.

4. The method of claim 3, wherein said amplitude parameters depend on a depth, with respect to a focus plane of said light-field content, of pixels of said all-in-focus content to which said amplitude parameters apply.

5. The method of any preceding claim, **wherein** it also comprises decoding parameters representative of a minimal and of a maximal depth of a focus plane of said light-field content.

6. The method of any preceding claim, **wherein** said bokeh model is a Gaussian filter.

7. The method of any of claims 1 to 5, **wherein** said bokeh model is a filter taking account of at least one characteristic of a lens used for capturing said light-field content.

8. A device for decoding a signal representative of a light-field content, comprising a processor configured for decoding an all-in-focus content associated to said light-field content and depth data associated to said all-in-focus content, wherein said processor is also configured for decoding information representative of a bokeh model to be applied to said all-in-focus content.

9. A computer program product downloadable from a communication network and/or recorded on a medium readable by a computer and/or executable by a processor, comprising program code instructions for implementing a method according to any one of claims 1 to 7.

10. A non-transitory computer-readable medium comprising a computer program product recorded thereon and capable of being run by a processor, including program code instructions for implementing a method according to any one of claims 1 to 7.

11. A method for rendering a light-field content, comprising decoding an all-in-focus content associated to said light-field content and depth data associated to said all-in-focus content, wherein it also comprises:

- decoding information representative of a bokeh model to be applied to said all-in-focus content;
- determining a focus plane for said light-field content;
- applying said bokeh model to said all-in-focus content as a function of a depth of pixels in said all-in-focus content with respect to said focus plane;
- rendering said light-field content.

12. A device for rendering a light-field content, comprising a processor configured for decoding an all-in-focus content associated to said light-field content and depth data associated to said all-in-focus content,
**wherein** it also comprises:

- a user interface for determining a focus plane for said light-field content,
- a display for rendering said light-field content,

**and wherein** said processor is also configured for decoding information representative of a bokeh model to be applied to said all-in-focus content and for applying said bokeh model to said all-in-focus content as a function of a depth of pixels in said all-in-focus content with respect to said focus plane.

13. A signal representative of a light-field content comprising at least one field comprising an all-in-focus content associated to said light-field content and at least one field comprising depth data associated to said all-in-focus content, wherein it also comprises at least one field comprising information representative of a bokeh model to be applied to said all-in-focus content.

14. A method for encoding a signal representative of a light-field content, comprising encoding an all-in-focus content associated to said light-field content and depth data associated to said all-in-focus content,
**wherein** it also comprises encoding information representative of a bokeh model to be applied to said all-in-focus content.

15. A device for encoding a signal representative of a light-field content, comprising a processor configured for encoding an all-in-focus content associated to said light-field content and depth data associated to said all-in-focus content,
**wherein** said processor is also configured for encoding information representative of a bokeh model to be applied to said all-in-focus content.

Fig. 1

Fig. 2A

Fig. 2B

Fig. 3

Fig. 4A          Fig. 4B

50

51

54

53

52

Fig. 5A

55

56

59

58

57

Fig. 5B

| NAL_VPS | NAL_SPS | NAL_PPS | NAL_SEI | NAL_IDR | NAL_TRAIL_R | NAL_TRAIL_R |

Fig. 6

BS                    71

```
┌──────────────┐   ┌──────────────┐   ┌──────────────┐
│  DECODING    │   │ DECODING AIF │   │  DECODING    │──72
│  DEPTH DATA  │   └──────────────┘   │ BOKEH MODEL  │
70─└──────────────┘                    └──────────────┘
```

```
                ┌──────────────┐        ┌──────────────┐
FP ───────────▶ │  SYNTHESIZE  │        │ APPLY BOKEH  │──74
                │PICTURE FOCUSED│       │ MODEL TO AIF │
                │     AT FP     │       └──────────────┘
            73─ └──────────────┘
```

```
              ┌──────────────┐
         75─  │ WEIGHTED SUM │
              └──────────────┘
              ┌──────────────┐
         76─  │  RENDERING   │
              └──────────────┘
```

Fig. 7

```
┌──────────┐   ┌──────────┐        ┌──────────┐
│Processor │   │ Storage  │        │Interface │──── To external
│   101    │   │   Unit   │        │   Unit   │      Apparatus
└──────────┘   │   102    │        │ 200  105 │
               └──────────┘        └──────────┘
         ┌──────────┐   ┌──────────┐
         │  Input   │   │  Output  │          106
         │ Device   │   │ Device   │
         │   103    │   │   104    │
         └──────────┘   └──────────┘
```

Fig. 8

101 102 200 105

| Processor | | Storage Unit | | Interface Unit | — To external Apparatus |

Input Device

Output Device

106

103 104

Fig. 9

101 102 200 105

| Processor | | Storage Unit | | Interface Unit | — To external Apparatus |

Input Device

Output Device

106

103 104

Fig. 10

Europäisches
Patentamt

European
Patent Office

Office européen
des brevets

# EUROPEAN SEARCH REPORT

Application Number

EP 15 30 7135

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2015/115946 A1 (ERICSSON TELEFON AB L M [SE]) 6 August 2015 (2015-08-06) * page 1 - page 33 * ----- | 1-15 | INV. H04N19/46 |
| X | EP 2 687 890 A1 (SONY CORP [JP]) 22 January 2014 (2014-01-22) * paragraph [0001] - paragraph [0048] * ----- | 1,3,4 | |
| A | HEUNG-YEUNG SHUM ET AL: "Review of image-based rendering techniques", OPTOMECHATRONIC MICRO/NANO DEVICES AND COMPONENTS III : 8 - 10 OCTOBER 2007, LAUSANNE, SWITZERLAND; [PROCEEDINGS OF SPIE , ISSN 0277-786X], SPIE, BELLINGHAM, WASH, vol. 4067, 1 January 2000 (2000-01-01), pages 2-13, XP002401068, ISBN: 978-1-62841-730-2 * paragraph [0002] - paragraph [0002] * ----- | 1-15 | |
| | | | TECHNICAL FIELDS SEARCHED (IPC) H04N |

The present search report has been drawn up for all claims

| Place of search | Date of completion of the search | Examiner |
|---|---|---|
| Munich | 8 March 2016 | Cordara, Giovanni |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
.................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 15 30 7135

This annex lists the patent family members relating to the patent documents cited in the above-mentioned European search report.
The members are as contained in the European Patent Office EDP file on
The European Patent Office is in no way liable for these particulars which are merely given for the purpose of information.

08-03-2016

| Patent document cited in search report | | Publication date | Patent family member(s) | | Publication date |
|---|---|---|---|---|---|
| WO 2015115946 | A1 | 06-08-2015 | NONE | | |
| EP 2687890 | A1 | 22-01-2014 | CA | 2820006 A1 | 19-01-2014 |
| | | | CN | 103581686 A | 12-02-2014 |
| | | | EP | 2687890 A1 | 22-01-2014 |
| | | | JP | 2014029528 A | 13-02-2014 |
| | | | US | 2014023283 A1 | 23-01-2014 |

EPO FORM P0459

For more details about this annex : see Official Journal of the European Patent Office, No. 12/82

## REFERENCES CITED IN THE DESCRIPTION

### Patent documents cited in the description

- US 20130222633 A

- US 8514491 B2

### Non-patent literature cited in the description

- **WILBURN et al.** High performance imaging using large camera arrays. *ACM Transactions on Graphics (TOG),* 2005, vol. 24 (3), 765-776
- **REN NG et al.** Light Field Photography with a hand-Held Plenoptic Camera. *Stanford University Computer Science Tech Report CSTR 2005-02,* April 2005

- **M.W TAO et al.** *Depth from Combining Defocus and Correspondence Using Light-Field Cameras*
- **M.W.TAO et al.** *Depth from Combining Defocus and Correspondence using Light-Field Cameras*